# EUROPEAN PATENT APPLICATION

(11) **EP 1 547 463 A2**
(43) Date of publication of application: **29.06.2005**
(21) Application number: 04029948.9
(22) Date of filing: 17.12.2004
(51) Int. Cl.: A01K 5/01, A01K 1/10

(54) **Support for a feeding trough or a manger**

(30) Priority: 19.12.2003 DK 200301900
(71) Applicant: Polyflex ApS, 7480 Vildbjerg (DK)
(72) Inventor: Sorensen, Villy Juhl, 7430 Ikast (DK)
(74) Representative: Gregersen, Niels Henrik

(57) **Abstract**

There is described a support (6-11) for feeding troughs or mangers (12). The support has a lower surface (18) for disposal against a floor (5) and an upper surface (19) for supporting a feeding trough (12). As the support surfaces (18, 19) form a mutual angle in longitudinal direction, there may be compensated for a slope of the floor, so that the feeding trough (12) is disposed horizontally even if mounted on a stable floor with a slope.

## Description

### Field of the Invention

The present invention concerns a support for feedings troughs or mangers for use in stables, preferably feeding troughs located on the stable floor. The invention furthermore concerns a combination of support and feedings troughs or mangers for use in stables, preferably feeding troughs located on the stable floor. The invention also concerns a use of the support in a combination.

### Background of the Invention

Until now, feeding troughs have been cast into or mounted in the foundation of the stable building. It has been possible thereby to dispose the feeding troughs with an orientation in relation to horizontal which is desirable for avoiding feed to gather at one end of the feeding trough. Alternatively, one has also mounted feeding troughs so that a slope occurs for draining off moisture via an outlet at the end of the feeding trough.

When building stables, the floor surface is also made with a grating design running continuously through the stable sections where the animals stay and where the feeding troughs are located. In such stables the feeding troughs will be mounted via a support which is clamped to the feeding trough and to the floor. A support may also be applied in stable sections where the floor is continuous in the stable section where the feeding trough is located. In this design, the orientation of the feeding trough in relation to horizontal is dependent on the slope/orientation relative to horizontal.

The feeding troughs can be made of different materials, as e.g. concrete, polymeric concrete and steel.

The prior art solutions are thus connected with the disadvantages of traditional feeding troughs, as the feed in these troughs may gather in one end thereof. Alternatively, a casting with concrete may be established for levelling slope under the feeding troughs.

In order to relieve the problem of the slope of the floor giving rise to gathering of feeding at one end of the feeding trough, it is also known to mount the feeding troughs in the stable equipment. This usually occurs with feeding troughs of stainless steel. It is, however, often undesirable to mount in stable equipment as well as it is often desirable to avoid feeding troughs of steel and instead use feeding troughs of concrete/polymeric concrete. These are, however, unsuited for mounting on stable equipment which is typically formed as partitionings.

### Object of the Invention

It is the purpose of the present invention to relieve the drawbacks of the prior art feeding troughs and supports therefor by indicating a system with universal support for adjusting the orientation of the feeding trough in relation to horizontal and in relation to the slope of the base on which the feeding trough is mounted.

According to the present invention, this is achieved with a support which is peculiar in that it has a lower support surface for bearing against the stable floor and an upper support surface on which the feeding trough is abutting, and that the lower and upper support surfaces mutually form an angle in longitudinal direction.

### Description of the Invention

The combination according to the invention is peculiar in that the support has a lower support surface for bearing against the stable floor and an upper support surface on which the feeding trough is abutting, that the feeding trough has a bottom face for the feed and a lower abutment surface for its abutment against the upper support surface of the support, and that the lower and upper support surfaces mutually form an angle in longitudinal direction, or that the bottom face in the feeding trough and the lower abutment surface form a mutual angle in longitudinal direction.

The system thus includes base sections with integrated slope which is opposite of the slope of a floor on which the support is mounted. The disadvantages mentioned in the introduction are hereby avoided. There is achieved a feeding trough in which the bottom surface for the feed is kept with predetermined orientation, preferably horizontal, as the angle between the support faces establishes a levelling of the slope in the floor in stable sections, preferably pigstys.

The system furthermore includes a support with T-shape so that an "skidproof" platform part is formed on which animals, preferably pigs, may step on when eating from the feeding trough.

A feeding trough is built up of several sections with a length facilitating handling and casting of the sections. The sections may e.g. be adapted to a standard floor for a pig stable (possibly slatted) of 3200 mm with slope - either 3-5% or 2-3% - then a "straight" section of 1600 mm.

The material for support as well as feeding troughs may be polymeric concrete or similar. When using the system, the feed will be evenly distributed in standard feeding troughs; there will be no dependency on other equipment, and the system is installed easily and rapidly . It may e.g. be bolted directly into slatted floors. The system is flexible with regard to rebuilding (as opposed to cast concrete).

Alternatively, the material for supports as well as feeding troughs may be of concrete, plastic, and/or metal, where in one embodiment it may be a combination of a support in one material and a feeding trough in another material.

In an embodiment, the support is made entirely or partly integrated with the feeding trough, e.g. cast in one and/or together with the feeding trough, where it may be possible to form an assembled feeding trough of assembled sections of whole supports, possibly including feeding trough.

In this application, the invention will be explained in more detail with reference to an an embodiment of supports that may compensate for the slope present in a typical stable for porkers.

According to the invention, levelling of a slope from 2 to 6 % is effected.

By using a support with a slope of 2%, levelling of slope from 2 to 3% for the floor is established.

The feeding trough is a newly developed feeding trough for pigstys. The feeding trough is made of polymeric concrete. The feeding trough is mounted in a way that ensures that the feeding trough is cleaning friendly. On the bottom of the feeding trough a recess is made which is intended for a support for fastening the feeding trough on slatted floors. In cases where the feeding trough is to be fastened on a permanent floor or an enviromental slat, a corresponding support is applied externally of the feeding trough. The feeding trough elements are provided with tongue and groove joint, meaning that it is only necessary to trowel the joints with an elastic acidproof filler for sealing and binding the feeding troughs together. The elastic filler may be cut up later, after which the feeding troughs may be moved.

In cases, where the feeding trough is used in a stable with partiallly slatted floor and with a slope on the solid floor, the universal support may be used for levelling the slope on the solid floor. The support is preferably made in two versions, for floors with 2% slope and 4% slope, respectively. The support is designed so that it may be adapted to many different types of feeding troughs.

### Short Description of the Drawing

In the following, the invention will be explained in more detail with reference to the enclosed drawing where:
Fig. 1 shows a schematic view of a pigsty in which is used a support and a combination according to the invention;
Fig. 2 shows a section through a first embodiment of a support for a feeding trough;
Fig. 3 shows a cross-section corresponding to Fig. 2 but with another shape of the used feeding trough;
Fig. 4 shows a series of end views of supports corresponding to supports used in the pigsty shown in Fig. 1;
Fig. 5 a series of end views corresponding to the views shown in Fig. 4; and
Fig. 6 shows a perspective view of an alternative embodiment of a support for a feeding trough; and
Fig. 7 shows an end view of a support and a feeding trough from Fig. 6.

In the following, identical or corresponding elements are denoted with the same reference number, and no specific explanation will thus be given in connection with each individual embodiment.

### Detailed Description of the Invention

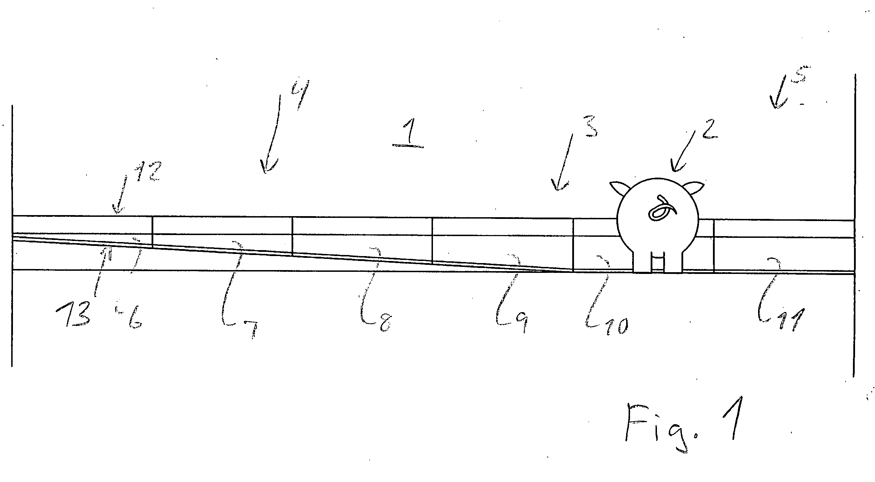

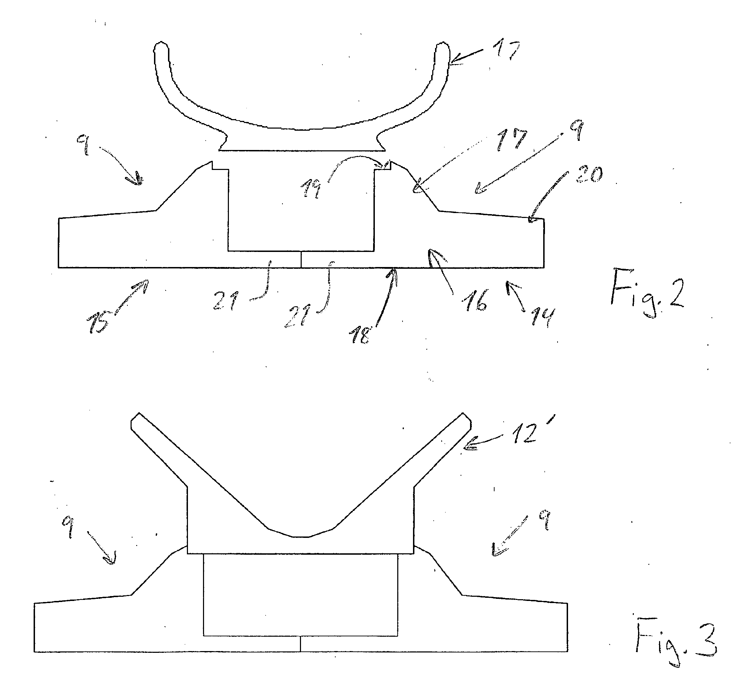

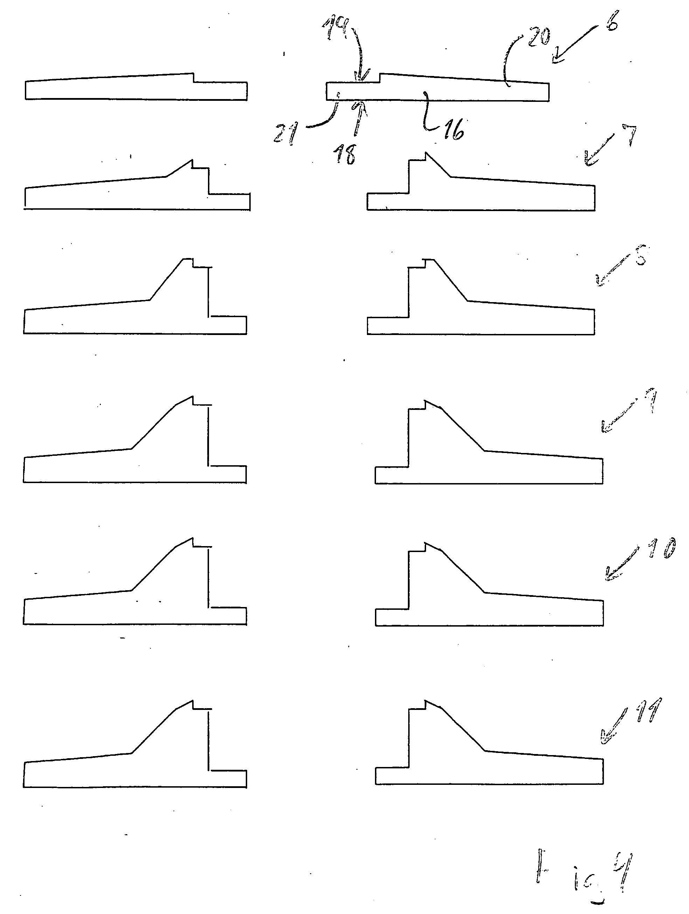

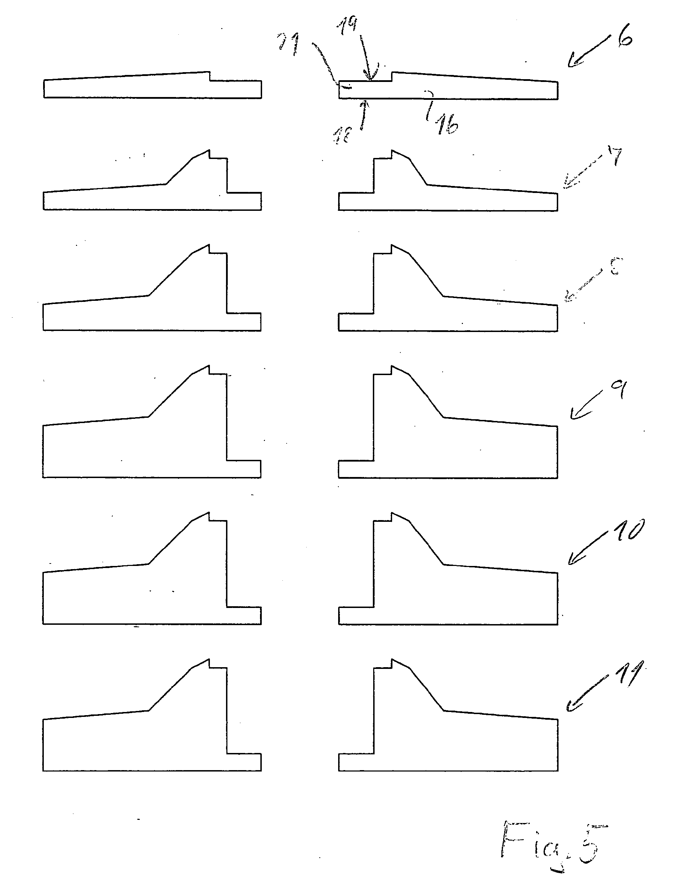

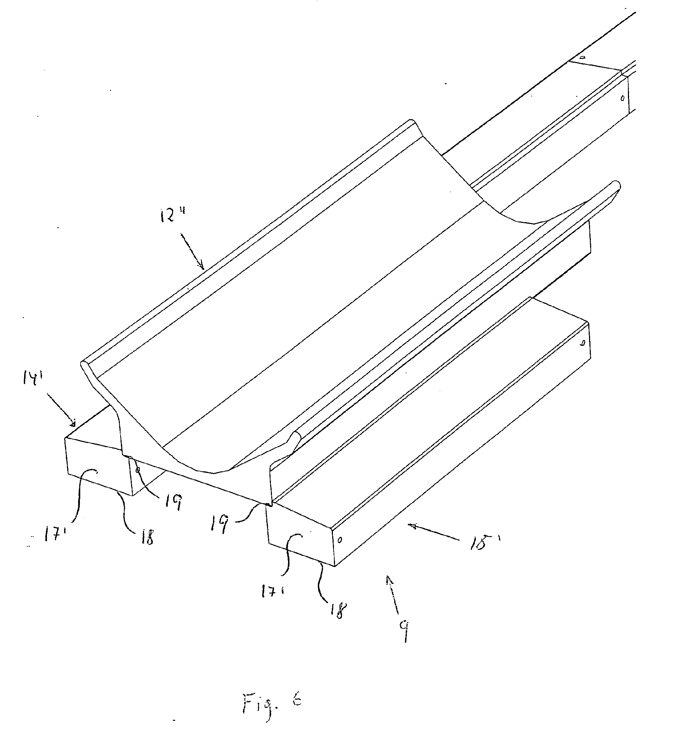

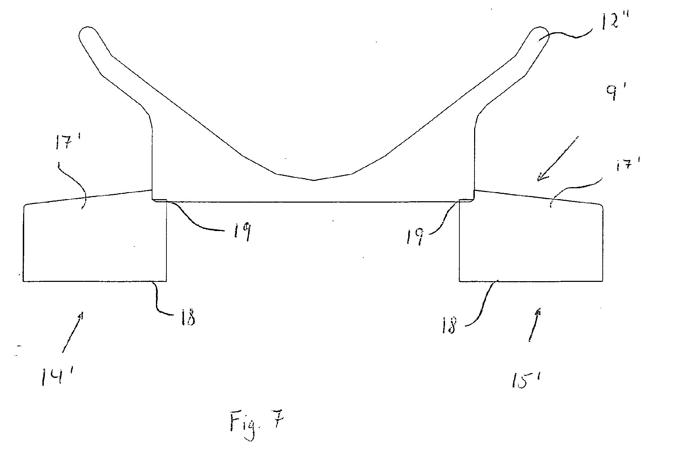

Fig. 1 shows a pigsty 1 with a porker 2 standing and eating from a feeding trough 3. The pigsty has a floor consisting of a first section 4 with slope and a second section 5 without any slope. In the stable section 4 where the floor surface 13 has a slope, supports 6, 7, 8 and 9 will have decreasing height over their length. In the stable section 5, supports 10 and 11 will have uniform height along their length.

The supports are used for supporting identical feeding troughs 12 that are disposed in a row of sections with a length corresponding to the length of each of the supports. In the shown embodiment, the length will be 600 mm for the sections 10 and 11, and 800 mm for the sections 6-9. This corresponds to a pigsty having a floor area with a slope of 3200 mm and a floor surface without any slope of 1600 mm. In the shown situation, the slope of the floor surface 13 will be 4%.

Figs. 2 and 3 illustrate that each support, represented here by the support 9, is divided into two largely T-shaped sections 14, 15. Each of the T-shaped sections has a cross member 16 and a stem 17. At the underside of the cross member 16, the support has a lower support surface 18 which is intended for bearing against the floor surface 13. At the stem 17 of the T, at the side facing upwards in use, there will be a support face 19 upon which the feeding trough 12 is located. The support faces 18 and 19 will form a mutual angle corresponding to the slope of the floor in longitudinal direction of the support.

Fig. 3 illustrates an embodiment where the feeding trough 12' has another shape than the feeding trough 12 shown in Fig. 2.

Figs. 4 and 5 show end views of each of the platforms 6-11 at the end facing left on Fig.1. The end views shown in Fig. 5 differs in that Fig. 2 illustrates a series of supports 6-11 for compensating for a slope in the floor of 2%, and Fig. 5 illustrates a series of supports for compensating for a slope in the floor of 4%.

In Fig. 5 appears that the first support in the shown embodiment does not have T-shape but a flat shape that largely comprises the cross member 16 of the T only.

It appears that the supports at the side facing out of the feeding trough 12 has a platform section 20 on which the animals may step when eating from the feeding trough. In the shown embodiment, the platform 20 will have a height of 18 mm at its outer end, and there will also be a height of 18 mm between the support faces 18 and 19.

In the second view, the beginning end face on the support 7 is seen, corresponding to the finishing end face on the support 6. In the third view, the beginning end face on the support 8 is seen, the end face corresponding to the finishing end face on the support 7. It appears that there will be an increased height on the supports 6, 7, 8 and 9. The start of the support 10, which is seen in the fifth drawing, corresponds to the finishing end face of the support 9. There will be no slope between these two, as well as there will be no slope between the supports 10 and 11. The distance between the lower support face 18 and the upper support face 19 will be 82 mm in the support 11 shown in the sixth drawing. This corresponds to the height between the support faces on the finishing part of the support 9.

In Fig. 4 and 5 it is seen that the cross member of the T facing in under the feeding trough 12 has a flange 21. In Figs. 4 and 5 the flanges are disposed with mutual spacing in the shown embodiment. In the shown embodiment, the flanges 21 will, however, have an extent as illustrated in Figs. 2 and 3 so that they abut on each other under the feeding trough 12. Hereby is formed a closure downwards against a slatted floor or similar. Hereby is avoided that mice, vermins or other may find their way through a slatted floor under the feeding trough 12.

In the shown embodiment, a row of sections are joined for forming an assembled feeding trough that extends in the length of the stable. Hereby there will be no need for end plates. If a free-standing feeding trough and a free-standing support are used, there will be provided end plates on feeding trough as well as on support so as to provide a covering for avoiding that mice and other animals enter the interspace under the feeding trough.

The shown T-shaped design of the support with relative thin cross member on the stem of the T is advantageous with regard to handling. The products hereby become lighter and easier to cast and easier to transport. Furthermore, a material saving will be achieved which is advantageous if supports and feeding troughs are made of polymeric concrete, which is a relatively expensive material compared with traditional concrete.

It is preferred to make supports in two halves as this facilitates handling in transportation, as well as it is also easier to manufacture two halves instead of making one support, as hereby there will be a risk that the support by handling may break in the central part under the feeding trough in the embodiments where there is a considerable height on the support and thereby a great weight on the outer parts of the support.

Alternatively, it is possible to make supports, where the support is cast in one piece and/or together with the feeding trough, where it may be possible to form an assembled feeding trough of assembled sections of whole supports, possibly including feeding trough.

Figs. 6 and 7 show an alternative embodiment of a support 9' for a feeding trough 12", where each support, here represented by the support 9', is divided into two sections 14', 15' that each are constituted by a stem 17'. At an underside of the stem 17', the support 9 has a lower support surface 18 which is intended for bearing against the floor surface (not shown). At the top side of the stem 17', the support 9' has an upper support face 19 on which the feeding trough 12" is disposed. The support faces 18 and 19 will form a mutual angle corresponding to the slope of the floor (not shown) over the longitudinal direction of the support 9'. In the shown embodiment, the support is not designed with a tread face, entailing that the animal's body is entirely placed on the floor surface when the animal eats of the feeding trough. If the support is divided into two sections that each are constituted by one stem without associated tread face, it will be possible to produce supports that do not take up very much space during transport, irrespectively whether the sections are separate or cast in one with the feeding trough.

## Claims

1. Support for feedings troughs or mangers for use in stables, preferably feeding troughs located on the stable floor, **characterised in that** it has a lower support surface for bearing against the stable floor and an upper support surface on which the feeding trough is abutting, and that the lower and upper support surfaces mutually form an angle in longitudinal direction.

2. Support according to claim 1, **characterised by** having decreasing height along its length.

3. Support according to claim 1 or 2, **characterised by** being formed by two largely T-shaped parts which in use are disposed with the cross member of the T facing the floor, and where the lower support surface is formed on the cross member of the T, and by the upper support surface being formed at the top of the upwards facing stem of the T.

4. Support according to claim 3, **characterised in that** it is made with such a width of the cross members of the T so that they abut under a feeding trough mounted in the fitting.

5. Support according to any preceding claim, **characterised by** being made of one or more of the following materials:
- polymeric concrete;
- concrete;
- plastic; and/or
- metal.

6. Support according to any preceding claim, **characterised by** being made in lengths between 600 mm and 1500 mm, preferably between 800 mm and 1200 mm.

7. Support according to any preceding claim, **characterised in that** the mutual angle is sized for compensating for a slope of the floor between 2 and 6%.

8. Support according to any preceding claim, **characterised by** being made entirely or partly integrated with the feeding trough.

9. Combination of support and feedings troughs or mangers for use in stables, preferably feeding troughs located on the stable floor, **characterised in that** the support has a lower support surface for bearing against the stable floor and an upper support surface on which the feeding trough is abutting, that the feeding trough has a bottom face for the feed and a lower abutment surface for its abutment against the upper support surface of the support, and that the lower and upper support surfaces mutually form an angle in longitudinal direction, or that the bottom face in the feeding trough and the lower abutment surface form a mutual angle in longitudinal direction.

10. Combination according to claim 9, **characterised in that** the mutual angle is sized for compensating for a slope of the floor between 2% and 6%.

11. Use of a support according to any of claims 1 - 8 in a combination according to claim 9 or 10.
